# FASCICULE DE BREVET EUROPEEN

(11) **EP 1 723 005 B1**
(45) Date de publication et mention de la délivrance du brevet: **24.09.2008**
(21) Numéro de dépôt: 05739677.2
(22) Date de dépôt: 01.03.2005
(51) Int. Cl.: B60R 9/06, B60R 9/10

(54) **PORTE-CHARGE DESTINE A EQUIPER L ARRIERE D UN VEHICULE AUTOMOBILE**
AM HECK EINES KRAFTFAHRZEUGS ANGEBRACHTER LASTTRÄGER
LOAD CARRIER MOUNTED AT THE REAR OF A MOTOR VEHICLE

(30) Priorité: 02.03.2004 FR 0450411
(43) Date de publication de la demande: 22.11.2006
(73) Titulaire: Renault SAS, 92100 Boulogne Billancourt (FR)
(72) Inventeur: PREMARTIN, Arnaud, F-92120 Montrouge (FR); SAILLARD, Patrick, F-75018 Paris (FR); VEUILLOT, Olivier, F-94450 Limeil Brevannes (FR)
(86) Numéro de dépôt international: PCT/FR2005/050133
(87) Numéro de publication internationale: WO 2005/085006

(56) Documents cités:
- DE-U- 20 304 098
- FR-A- 2 823 161
- US-A- 3 941 492
- US-A- 4 422 794
- US-A- 4 880 084
- US-A- 4 971 474
- US-A- 5 460 304
- US-A- 5 738 261

## Description

L'invention concerne un porte-charge destiné à équiper l'arrière d'un véhicule automobile.

L'invention concerne plus particulièrement un porte-charge muni d'un système de fixation à une partie arrière d'un véhicule comportant les moyens suivants ou équivalents:
- un bras longitudinal dont une extrémité est apte à coopérer avec un manchon solidaire d'un élément de structure du véhicule,
- un levier dont une extrémité est montée à rotation par rapport au bras autour d'un axe transversal porté par l'extrémité du bras,
- un moyen de rappel agencé entre le levier et le bras, exerçant une force dirigée du bras vers le levier,
- un moyen de verrouillage du système de fixation.

Il est de plus en plus fréquent d'équiper l'arrière de véhicules automobile de porte-charges tels que des porte-vélos. Il faut cependant que ces porte-vélos présentent un système de fixation qui soit d'une utilisation simple et rapide. Il également nécessaire que le système de fixation soit sûr et ne présente pas de risque de désolidarisation accidentelle ou intentionnelle du porte-vélo.

On connaît par la publication n° WO-A-03039912 un porte-vélo présentant un système de fixation comprenant deux bras longitudinaux, l'extrémité de chacun des bras pouvant être insérée à l'intérieur d'un manchon porté par un élément de structure du véhicule. Une extrémité d'un levier est montée à rotation autour d'un axe porté par l'extrémité du bras. Le levier comporte aussi une encoche destinée à coopérer avec un doigt agencé à l'intérieur du manchon. Un moyen de rappel est agencé entre le bras et l'extrémité libre du levier. Le système de fixation comporte également une vis de verrouillage destinée à coopérer avec un trou ménagé dans le levier et un filetage ménagé dans le bras se trouvant chacun de part et d'autre du moyen de rappel.
Ainsi, lorsqu'un utilisateur insère le bras dans le manchon, le levier effectue une rotation vers le bas autour de l'axe et est mis sous contrainte jusqu'à ce que le doigt pénètre automatiquement dans l'encoche et reste en place sous l'effet du moyen de rappel. Pour éviter que le système de fixation soit désolidarisé accidentellement, la vis de verrouillage permet de maintenir le levier sous tension.
Ce système de fixation présente cependant un inconvénient : le système de verrouillage, qui nécessite une certaine force de serrage n'est pas facile à utiliser. Par exemple, les personnes n'ayant que peu de force dans les mains ou bien les utilisateurs portant des gants par temps froid, par exemple, n'arriveront pas à serrer suffisamment le moyen de verrouillage qui risque ensuite, avec les vibrations, de se desserrer complètement. Le porte-charge dont la fixation n'est pas verrouillée peut alors se désolidariser du véhicule et présenter un danger.

Afin de pallier ces inconvénients, l'invention a pour objet un porte-charge présentant un système de fixation sûr et facile d'utilisation.
L'invention a aussi pour objet un porte-charge pouvant être utilisé sur des véhicules différents.
L'invention a en outre pour objet un porte-charge dont les risques de vol sont limités.

A cet effet, l'invention propose un porte-charge du type cité ci-dessus, **caractérisé en ce que** le moyen de verrouillage est une poignée comportant une partie de préhension et une partie formant came montée à rotation par rapport au levier autour d'un axe transversal porté par l'extrémité libre du levier entre:
- un état déverrouillé dans lequel la course de la poignée autour de l'axe est libre entre une position dans laquelle elle est en butée contre l'extrémité libre du levier et une position dans laquelle un point de la surface de la came dit "d'attaque" est en contact avec le bras et
- un état de verrouillage dans lequel la course de la poignée autour de l'axe et la coopération de la poignée avec le bras provoquent la rotation du levier autour de l'axe dans le sens horaire jusqu'à une position finale verrouillée du levier dans laquelle le levier sous contrainte est solidaire du manchon.

Selon d'autres caractéristiques de l'invention:
- Une gorge ménagée dans la surface de la came est guidée le long du bras.
- La gorge et le bras sont de forme complémentaire.
- Le point d'attaque est le point de la surface de la came le plus éloigné de l'axe.
- La distance entre l'axe et le point de la came est supérieure à une distance correspondant à la distance entre l'axe et le bras lorsque le levier est en position finale verrouillée.
- Lors du verrouillage de la poignée, après le passage du point, la distance entre l'axe et le bras augmente.
- L'axe de la poignée est monté à translation à l'intérieur d'une lumière ménagée dans les flancs du levier de manière à faire varier la distance entre l'axe et l'axe.
- Il est prévu des moyens de blocage de l'axe à l'intérieur de la lumière.
- Il est prévu une serrure de façon à solidariser la poignée et l'extrémité libre du levier se prolongeant sous la partie de préhension.
- Il est prévu un moyen d'encliquetage de façon à solidariser la poignée et l'extrémité libre du levier se prolongeant sous la partie de préhension.

D'autres caractéristiques et avantages de l'invention apparaîtront à la lecture de la description d'exemples de réalisation d'un porte charge selon l'invention en référence aux dessins annexés dans lesquels ;
- La figure 1 est une vue en perspective d'un porte-charge selon l'invention agencé à l'arrière d'un véhicule.
- La figure 2 est une vue schématique latérale d'un système de fixation du porte-charge selon l'invention, en position initiale d'insertion.
- La figure 3 est vue schématique latérale du système de fixation de la figure 2 en position intermédiaire d'insertion.
- La figure 4 est une vue schématique latérale du système de fixation de la figure 2 en position fixée non verrouillée.
- La figure 5 est une vue schématique du système de fixation de la figure 2 en position fixée verrouillée.

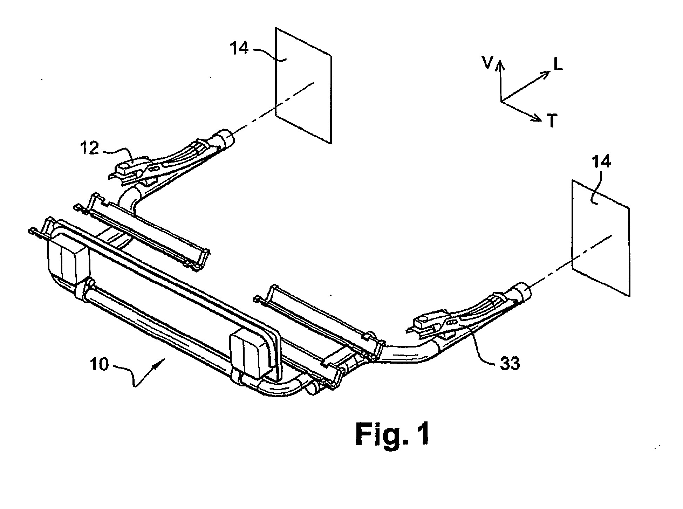

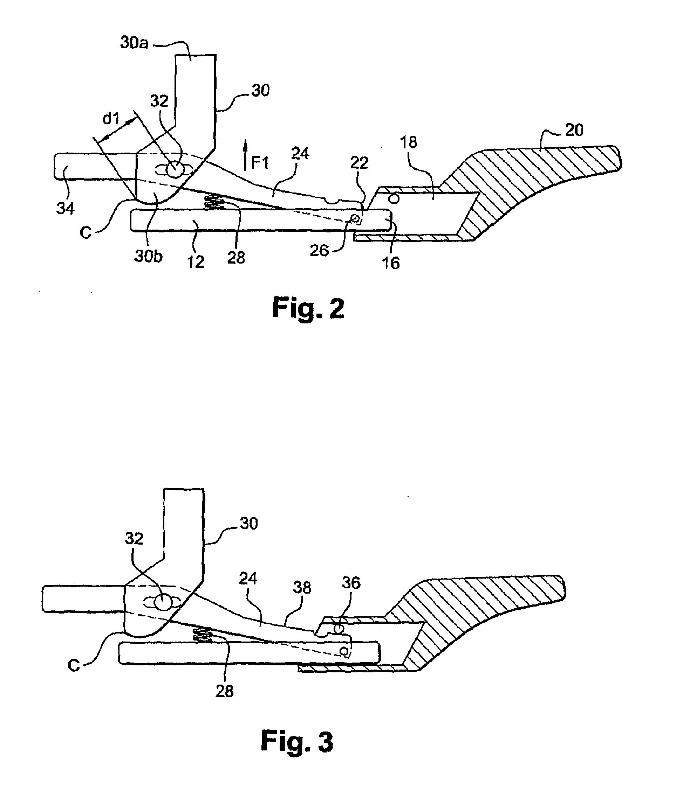

Dans la description qui suit, nous prendrons à titre non limitatif une orientation longitudinale, verticale et transversale indiquée par le trièdre L,V,T de la figure 1. On prendra également comme convention la direction de l'arrière vers l'avant comme étant de gauche à droite sur les figures 2 à 5.

Des éléments identiques ou analogues sont désignés par les mêmes chiffres de référence.

Le porte-charge présente une symétrie générale par rapport à un plan longitudinal médian.

Tel que représenté à la figure 1, un porte-charge 10 comportant deux bras longitudinaux 12, est agencé à l'arrière d'un véhicule 14 représenté schématiquement. Les deux bras 12, par exemple de forme tubulalre, sont symétriques par rapport au plan longitudinal médian.

Tel que représenté à la figure 2, une extrémité 16 du bras 12 coopère avec un manchon 18 d'orientation globalement longitudinale solidaire d'un élément de structure 20 du véhicule.

Une extrémité 22 d'un levier 24 est montée à rotation par rapport au bras 12 autour d'un axe transversal 26 porté par ledit bras 12.

Un moyen de rappel 28 tel qu'un ressort hélicoïdal par exemple est agencé entre une partie sensiblement centrale du levier 24 et le bras 12. Le moyen de rappel 28 exerce une force dont le sens est indiqué par la flèche F1, tendant à éloigner le levier 24 du bras 12.

Une poignée 30 est montée à rotation par rapport au levier 24 autour d'un axe transversal 32 porté par une extrémité 34 du levier 24. La poignée 30 comporte une partie de préhension 30a et une partie formant came 30b.

Une extrémité libre 34 du levier 24 se prolonge sous la partie de préhension 30a de la poignée 30.

Avant l'insertion longitudinale du bras à l'intérieur du manchon 18, la poignée 30 est dans un état déverrouillé dans lequel sa course est libre entre une position dans laquelle la partie de préhension 30a est en butée contre l'extrémité 34 du levier 24 et une position dans laquelle un point C de la came 30b est en butée contre le bras 12.

Le point C est le point dit "d'attaque" de la came 30b. C'est en fait le premier point de la came 30b à entrer en contact avec le bras 12 lors de la rotation de la poignée 30 autour de l'axe 32 dans le sens anti-horaire.

Le point C est le point de la came 30b le plus éloigné de l'axe 32 et la distance entre l'axe 32 et le point C est notée d1.

Tel que représenté à la figure 3, le système de fixation est en position intermédiaire d'insertion dans laquelle il s'est déplacé vers l'avant du véhicule.

Un doigt transversal 36, agencé à l'intérieur du manchon 18, exerce, à l'encontre du moyen de rappel 28, une force sur une surface supérieure 38 du levier 24. Le levier 24 est alors sous tension et le ressort 28 est comprimé.

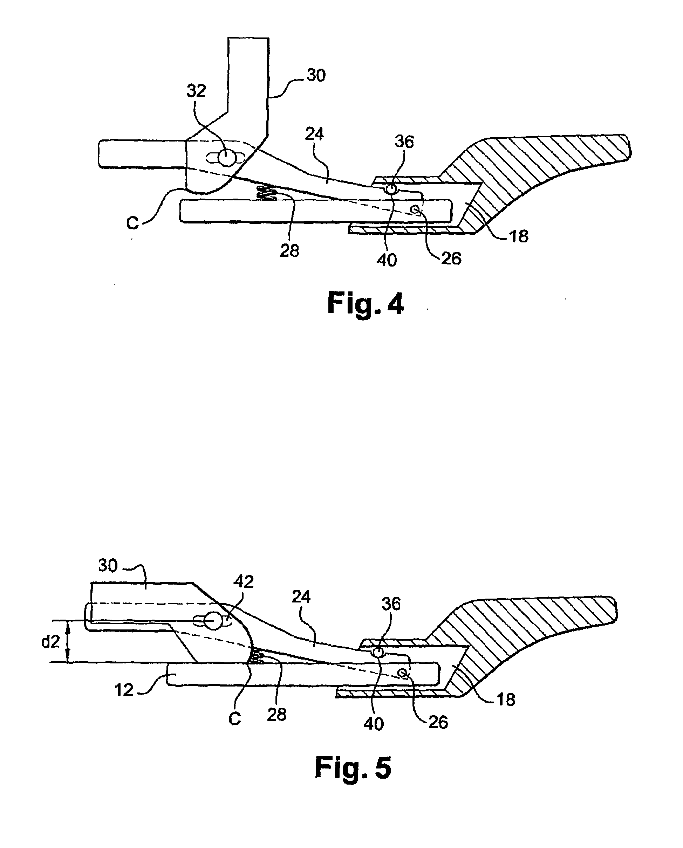

Tel que représenté à la figure 4, le système de fixation est en position dite fixée dans laquelle le bras s'est encore déplacé vers l'avant jusqu'à ce que le doigt 36 pénètre automatiquement sous l'effet du moyen de rappel 28 à l'intérieur d'une encoche 40 ménagée dans la surface 38 du levier 24.

Dans cette position, la poignée 30 est encore en état déverrouillé.

Tel que représenté à la figure 5, le système de fixation est passé en position dite fixée verrouillée.

En abaissant la partie de préhension 30a, la poignée 30 est passée, par une rotation dans le sens anti-horaire autour de l'axe 32 de son état déverrouillé à un état verrouillé de façon que, pendant l'opération de verrouillage, la distance entre l'axe 32 et le bras 12 augmente jusqu'à ce qu'elle soit égale à une distance d2.

Ainsi, lorsque la poignée 30 effectue une rotation autour de l'axe 32 dans le sens anti-horaire, le levier 24 effectue une rotation dans le sens horaire autour de l'axe 26 et est mis sous tension dans une position finale verrouillée dans laquelle le doigt 36 ne peut pas se dégager de l'encoche 40.

Avantageusement, au cours de la rotation de la came 30b autour de l'axe 32, le passage du point C forme un point résistant permettant de limiter les risques de déverrouillage accidentel. En effet, la distance d1 étant supérieure à la distance d2, la contrainte exercée sur le levier 24 au moment du passage du point C est alors plus grande que celle exercée lorsque le levier 24 est verrouillé. En fait, le point résistant correspond au moment où la distance entre l'axe 32 et le bras 12 est égale à d1.

La surface de la came 30b est complémentaire de celle du bras 12 et possède une gorge, non représentée, ayant la forme d'une portion de cercle, par exemple, de façon que la poignée 30 puisse être guidée sur le bras 12 pendant la rotation. Cette conformation de la came 30b permet aussi un maintien latéral de la poignée 30 sur le bras 12 limitant ainsi le risque de déboîtement du système de fixation en cas de choc latéral, par exemple.

Avantageusement l'axe 32 est monté à translation dans une lumière 42 ménagée dans les flasques 33 du levier 24. L'axe 32 comporte une partie pouvant coopérer avec des moyens d'indexation de la position de l'axe 32, qui ne sont pas détaillés car connus en eux-mêmes. La lumière 42 peut par exemple comporter des encoches. L'axe 32 peut alors occuper un état de blocage dans une position et un état de déblocage permettant le passage d'une position à une autre.

De cette façon, il est possible de faire varier la position de l'axe 32, c'est-à-dire sa distance par rapport à l'axe 26. En effet, le manchon 18 peut avoir une configuration différente, en fonction des véhicules. Il peut par exemple être plus long, ou bien le doigt 36 peut être plus ou moins haut. Ces paramètres font donc varier l'amplitude de la rotation du levier 24 en fonction du véhicule utilisé. Par exemple, si l'amplitude de rotation du levier 24 est plus grande, la poignée 30 risque de tourner dans le vide et de ne pas pouvoir coopérer avec le bras 12. Au contraire, si l'amplitude d'ouverture du levier est plus faible, il risque d'être impossible, à cause du bras 12, de faire tourner la poignée autour de l'axe 32. Or, il est gênant de devoir changer de porte-vélo en fonction du véhicule que l'on utilise. La lumière 42 permet donc de faire varier la position de l'axe 32 sans modifier la manière d'interagir entre la came 30b et le bras 12, en fonction du véhicule que l'on utilise. Ceci présente donc l'avantage de pouvoir utiliser toujours le même porte-vélo quel que soit le véhicule sur lequel il est monté.

Avantageusement, des moyens d'encliquetage, non représentés, permettent de solidariser la partie de préhension 30a et l'extrémité 34 du levier 24.

Avantageusement, une serrure conventionnelle, qui ne sera pas décrite ici car connue en soi, permet de solidariser la poignée 30 et l'extrémité 34 du levier 24 se prolongeant sous la partie de préhension 30b. On peut prévoir que la clé permettant de verrouiller la serrure soit la même que celle du véhicule. Cela présente l'avantage d'améliorer le verrouillage et d'empêcher le vol du porte-charge lorsque celui-ci est fixé sur le véhicule.

Pour déverrouiller le système de fixation, il suffit de tirer sur la partie de préhension 30b de façon à faire tourner la poignée 30 autour de l'axe 32 dans le sens horaire. Ainsi, pendant la rotation de la poignée 30, la distance entre l'axe 32 et le bras 12 diminue, ce qui fait tourner, selon le sens anti-horaire, le levier 24 autour de l'axe 26, à l'encontre du moyen de rappel 28. De cette manière, après le passage du point résistant, le doigt 36 n'est plus verrouillé dans l'encoche 40, ce qui permet de tirer longitudinalement vers l'arrière le bras 12. Une fois le bras 12 dégagé du manchon 18, le levier 24 revient en position écartée du bras 12 sous l'action du moyen de rappel 28.

## Revendications

1. Porte-charge (10) muni d'un système de fixation à une partie arrière d'un véhicule (14) comportant :
- un bras longitudinal (12) dont une extrémité (16) est apte à coopérer avec un manchon (18) solidaire d'un élément de structure (20) du véhicule (14),
- un levier (24) dont une extrémité (22) est montée à rotation par rapport au bras (12) autour d'un axe transversal (26) porté par l'extrémité (16) du bras (12),
- un moyen de rappel (28) agencé entre le levier (24) et le bras (12), exerçant une force dont le sens est indiqué par la flèche F1,
- un moyen de verrouillage du système de fixation,
**caractérisé en ce que** le moyen de verrouillage est une poignée (30) comportant une partie de préhension (30a) et une partie formant came (30b) montée à rotation par rapport au levier (24) autour d'un axe transversal (32) porté par l'extrémité libre (34) du levier (24) entre:
- un état déverrouillé dans lequel la course de la poignée (30) autour de l'axe (32) est libre entre une position dans laquelle elle est en butée contre l'extrémité libre (34) du levier (24) et une position dans laquelle un point (C) de la surface de la came (30b) dit "d'attaque" est en contact avec le bras (12) et
- un état de verrouillage dans lequel la course de la poignée (30) autour de l'axe (32) et la coopération de la poignée (30) avec le bras (12) provoquent la rotation du levier (24) autour de l'axe (26) dans le sens horaire jusqu'à une position finale verrouillée du levier (24) dans laquelle le levier (24) sous contrainte est solidaire du manchon (18).

2. Porte-charge (10) selon la revendication 1, **caractérisé en ce qu'**une gorge ménagée dans la surface de la came (30b) est guidée le long du bras (12).

3. Porte-charge (10) selon la revendication précédente, **caractérisé en ce que** la gorge et le bras (12) sont de forme complémentaire.

4. Porte-charge (10) selon l'une quelconque des revendications précédentes, **caractérisé en que** le point d'attaque (C) est le point de la surface de la came (30b) le plus éloigné de l'axe (32).

5. Porte-charge (10) selon l'une quelconque des revendications précédentes, **caractérisé en ce que** la distance (d1) entre l'axe (32) et le point (C) de la came (30b) est supérieure à une distance (d2) correspondant à la distance entre l'axe (32) et le bras (12) lorsque le levier (24) est en position finale verrouillée.

6. Porte-charge selon l'une quelconque des revendications précédentes, **caractérisé en ce que,** lors du verrouillage de la poignée (30), après le passage du point (C), la distance entre l'axe (32) et le bras (12) augmente.

7. Porte-charge selon l'une quelconque des revendications précédentes, **caractérisé en ce que** l'axe (32) de la poignée (30) est monté à translation à l'intérieur d'une lumière (42) ménagée dans les flancs (33) du levier (24) de manière à faire varier la distance entre i'axe (32) et l'axe (26).

8. Porte-charge (10) selon la revendication précédente, **caractérisé en ce qu'**il est prévu des moyens de blocage de l'axe (32) à l'intérieur de la lumière (42).

9. Porte-charge (10) selon l'une quelconque des revendications précédentes, **caractérisé en ce qu'**il est prévu une serrure de façon à solidariser la poignée (30) et l'extrémité libre (34) du levier (24) se prolongeant sous la partie de préhension (30a).

10. Porte-charge (10) selon l'une quelconque des revendications précédentes, **caractérisé en ce qu'**il est prévu un moyen d'encliquetage de façon à solidariser la poignée (30) et l'extrémité libre (34) du levier (24) se prolongeant sous la partie de préhension (30a).

## Claims

1. Load carrier (10) equipped with a system of fixing to a rear part of a vehicle (14) comprising:
- a longitudinal arm (12), one end (16) of which is capable of co-operating with a sleeve (18) solidly connected to an element of the structure (20) of the vehicle (14),
- a lever (24), one end (22) of which is mounted such that it can rotate, with respect to the arm (12), on a transverse pin (26) carried by the end (16) of the arm (12),
- a return means (28) incorporated between the lever (24) and the arm (12), exerting a force, whose direction is shown by the arrow F1,
- a means of locking the fixing system,
**characterized in that** the locking means is a handle (30) having a gripping part (30a) and a part forming a cam (30b) mounted such that, with respect to the lever (24), it can rotate on a transverse pin (32) carried by the free end (34) of the lever (24), between:
- an unlocked state, in which the movement of the handle (30) around the pin (32) is free between a position in which it abuts against the free end (34) of the lever (24) and a position in which a so-called "leading" point (C) of the surface of the cam (30b) is in contact with the arm (12), and
- a locked state, in which the movement of the handle (30) around the pin (32) and the co-operation of the handle (30) with the arm (12) cause the lever (24) to rotate on the pin (26) in a clockwise direction as far as a locked end position of the lever (24), in which the lever (24), under stress, is solidly connected to the sleeve (18).

2. Load carrier (10) according to Claim 1, **characterized in that** a groove contrived in the surface of the cam (30b) is guided along the arm (12).

3. Load carrier (10) according to the preceding claim, **characterized in that** the groove and the arm (12) are of complementary shape.

4. Load carrier (10) according to any one of the preceding claims, **characterized in that** the leading point (C) is the point of the surface of the cam (30b) furthest away from the pin (32).

5. Load carrier (10) according to any one of the preceding claims, **characterized in that** the distance (d1) between the pin (32) and the point (C) of the cam (30b) is greater than a distance (d2) corresponding to the distance between the pin (32) and the arm (12), when the lever (24) is in a locked end position.

6. Load carrier according to any one of the preceding claims, **characterized in that,** when locking the handle (30), the distance between the pin (32) and the arm (12) increases after the point (C) has been passed.

7. Load carrier according to any one of the preceding claims, **characterized in that** the pin (32) of the handle (30) is mounted in translation within a slot (42) contrived in the sides (33) of the lever (24) such that the distance between the pin (32) and the pin (26) can be made to vary.

8. Load carrier (10) according to the preceding claim, **characterized in that** means of locking the pin (32) inside the slot (42) are provided.

9. Load carrier (10) according to any one of the preceding claims, **characterized in that** a lock is provided to solidly connect the handle (30) to the free end (34) of the lever (24) extending beneath the gripping part (30a).

10. Load carrier (10) according to any one of the preceding claims, **characterized in that** a ratchet means is provided to solidly connect the handle (30) to the free end (34) of the lever (24) extending beneath the gripping part (30a).

## Patentansprüche

1. Gepäckträger (10), der mit einem System für die Befestigung an einem hinteren Teil eines Fahrzeugs (14) versehen ist, mit:
- einem longitudinalen Arm (12), wovon ein Ende (16) mit einer Buchse (18) zusammenwirken kann, die mit einem Strukturelement (20) des Fahrzeugs (14) fest verbunden ist,
- einem Hebel (24), wovon ein Ende (22) an dem Arm (12) drehbar um einen von dem Ende (16) des Arms (12) getragenen transversalen Drehzapfen (26) angebracht ist,
- einem Rückstellmittel (28), das zwischen dem Hebel (24) und dem Arm (12) angeordnet ist und eine Kraft ausübt, deren Richtung durch den Pfeil F1 gegeben ist, und
- einem Mittel zum Verriegeln des Befestigungssystems,
**dadurch gekennzeichnet, dass** das Verriegelungsmittel ein Griff (30) ist, der versehen ist mit einem Greifabschnitt (30a) und einem einen Nocken (30b) bildenden Abschnitt, der an dem Hebel (24) so angebracht ist, dass er um einen von dem freien Ende (34) des Hebels (24) getragenen transversalen Drehzapfen (32) drehbar ist zwischen:
- einem entriegelten Zustand, in dem die Bewegung des Griffs (30) um den Drehzapfen (32) zwischen einer Position, in der er an dem freien Ende (34) des Hebels (24) anschlägt, und einer Position, in der ein Punkt (C) der Oberfläche des Nockens (30b), der "Angriffspunkt" genannt wird, mit dem Arm (12) in Kontakt ist, frei ist, und
- einem verriegelten Zustand, in dem die Bewegung des Griffs (30) um den Drehzapfen (32) und die Zusammenwirkung des Griffs (30) mit dem Arm (12) die Drehung des Hebels (24) um den Drehzapfen (26) im Uhrzeigersinn bis in eine verriegelte Endposition des Hebels (24), in der der Hebel (24) kraftschlüssig mit der Buchse (18) verbunden ist, bewirken.

2. Gepäckträger (10) nach Anspruch 1, **dadurch gekennzeichnet, dass** eine in der Oberfläche des Nockens (30b) ausgebildete Nut längs des Arms (12) geführt wird.

3. Gepäckträger (10) nach dem vorhergehenden Anspruch, **dadurch gekennzeichnet, dass** die Nut und der Arm (12) eine komplementäre Form haben.

4. Gepäckträger (10) nach einem der vorhergehenden Ansprüche, **dadurch gekennzeichnet, dass** der Angriffspunkt (C) jener Punkt der Oberfläche des Nockens (30b) ist, der von dem Drehzapfen (32) am weitesten entfernt ist.

5. Gepäckträger (10) nach einem der vorhergehenden Ansprüche, **dadurch gekennzeichnet, dass** der Abstand (d1) zwischen dem Drehzapfen (32) und dem Punkt (C) des Nockens (30b) größer als ein Abstand (d2) ist, der dem Abstand zwischen dem Drehzapfen (32) und dem Arm (12) entspricht, wenn der Hebel (24) in der verriegelten Endposition ist.

6. Gepäckträger nach einem der vorhergehenden Ansprüche, **dadurch gekennzeichnet, dass** bei der Verriegelung des Griffs (30) nach dem Durchgang durch den Punkt (C) der Abstand zwischen der Achse (32) und dem Arm (12) zunimmt.

7. Gepäckträger nach einem der vorhergehenden Ansprüche, **dadurch gekennzeichnet, dass** der Drehzapfen (32) des Griffs (30) in einem in den Seitenflächen (33) des Hebels (24) ausgebildeten Langloch (42) translatorisch beweglich angebracht ist, derart, dass der Abstand zwischen dem Drehzapfen (32) und dem Drehzapfen (26) verändert wird.

8. Gepäckträger (10) nach dem vorhergehenden Anspruch, **dadurch gekennzeichnet, dass** Mittel zum Blockieren des Drehzapfens (32) in dem Langloch (42) vorgesehen sind.

9. Gepäckträger (10) nach einem der vorhergehenden Ansprüche, **dadurch gekennzeichnet, dass** ein Schloss vorgesehen ist, um den Griff (30) und das freie Ende (34) des Hebels (24), das den Greifabschnitt (30a) nach unten verlängert, fest zu verbinden.

10. Gepäckträger (10) nach einem der vorhergehenden Ansprüche, **dadurch gekennzeichnet, dass** ein Einrastmittel vorgesehen ist, um den Griff (30) und das freie Ende (34) des Hebels (24), das den Greifabschnitt (30a) nach unten verlängert, fest zu verbinden.
